# EUROPÄISCHE PATENTSCHRIFT

(11) **EP 2 197 101 B1**
(45) Veröffentlichungstag und Bekanntmachung des Hinweises auf die Patenterteilung: **03.06.2015**
(21) Anmeldenummer: 09015122.6
(22) Anmeldetag: 07.12.2009
(51) Int. Cl.: H02P 6/00, H02P 6/12, H02P 6/18, G06F 1/30, H02H 3/20, H02P 7/29, H04B 3/54

(54) **Datenübertragung für einen Elektromotor**
Data transfer for an electric motor
Transmission de données pour un moteur électrique

(30) Priorität: 12.12.2008 DE 102008062890
(43) Veröffentlichungstag der Anmeldung: 16.06.2010
(73) Patentinhaber: Ebm-Papst St. Georgen GmbH & CO. KG, 78112 St. Georgen (DE)
(72) Erfinder: Layes, Paul, 78052 Vilingen-Schwenningen (DE)
(74) Vertreter: Raible, Tobias

(56) Entgegenhaltungen:
- EP-A1- 1 830 463
- DE-C1- 19 612 696
- JP-A- 2007 116 625

## Beschreibung

Die Erfindung bezieht sich auf eine Datenübertragung für einen Elektromotor.

Es gibt Elektromotoren, die von außen gesteuert werden können. Die Drehzahl kann z.B. über die Höhe der Versorgungsspannung gesteuert werden, oder aber es kann eine Steuerleitung zur Signalübertragung vorgesehen werden.

Die JP 2007 116625 beschreibt ein Übertragungsgerät und ein Empfangsgerät zur Bilderzeugung, welche Geräte über eine Netzleitung und eine Masse-Leitung miteinander verbunden sind. Im Übertragungsgerät ist ein Gleichspannungsnetzteil vorgesehen, über welches einem Motor eine Betriebsspannung zugeführt wird. Zwischen dem Übertragungsgerät und dem Empfangsgerät kann eine Datenübertragung stattfinden, und hierfür werden über ein ASK-Verfahren oder ein FSK-Verfahren Daten auf die Betriebsspannung aufmoduliert und im jeweils anderen Gerät durch Fourier-Transformation demoduliert. In Abhängigkeit von den Daten wird ein CLK-Signal für die Ansteuerschaltung generiert.

Die DE 196 12 696 bezieht sich in der Beschreibungseinleitung auf eine Offenlegungsschrift, bei der eine Ersatz-Betriebsspannungsversorgung durch einen der speisenden Betriebsspannung parallel geschalteten Kondensator vorgesehen ist.

Die EP 1 830 463 A1 zeigt eine Aktor/Sensor-Schaltungsanordnung mit einer Brückenschaltung, über die ein Stellmotor in beide Richtungen betreibbar ist. Die Stellung eines Endschalters wird bestimmt, indem über eine Auswerteschaltung die analoge Spannung an einem Mess-Widerstand gemessen wird. Die Auswertung des analogen Signals erfolgt dann, wenn der Stellmotor gerade nicht in Betrieb ist, wenn also beispielsweise das Schloss entweder geöffnet oder geschlossen ist.

Es ist deshalb eine Aufgabe der Erfindung, eine neue Anordnung und ein neues Verfahren zur Datenübertragung bei einem Elektromotor bereitzustellen.

Diese Aufgabe wird gelöst durch eine Anordnung gemäß Anspruch 1 und ein Verfahren gemäß Anspruch 7. Durch die Verwendung der Versorgungsleitung zur Datenübertragung wird die Verkabelung vereinfacht, und es ergibt sich ein wirtschaftlicher und einfacher Aufbau einer solchen Anordnung.

Im rotierenden Rotor eines Elektromotors ist kinetische Energie gespeichert, weshalb sich die Drehzahl des Rotors kaum ändert, wenn die Energiezufuhr während der Übertragung von Daten kurzzeitig unterbrochen wird. Deshalb kann die Versorgungsleitung bivalent betrieben werden, also einmal zur Stromversorgung des Motors, und zum anderen zur Datenübertragung, wobei zur Datenübertragung die Stromversorgung des Motors kurz unterbrochen wird.

Bevorzugte Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen; sowie aus den Unteransprüchen. Es zeigt
- Fig. 1: ein Schaltbild mit einem Steuergerät und einem Motor,
- Fig. 2: eine schematische Darstellung einer Signalübertragung über die Spannungsversorgungsleitung,
- Fig. 3: eine andere schematische Darstellung einer Signalübertragung über die Spannungsversorgungsleitung,
- Fig. 4: ein Flussdiagramm für ein im Motor ablaufendes Hauptprogramm,
- Fig. 5: ein Flussdiagramm mit einer Routine zur Datenübertragung nach Fig. 2,
- Fig. 6: ein Flussdiagramm mit einer Routine zur Datenübertragung nach Fig. 3,
- Fig. 7: eine Darstellung eines Datenpakets, und
- Fig. 8: eine Darstellung eines Flussdiagramms mit einer Routine zum Einlesen der einzelnen Dateninformationen.

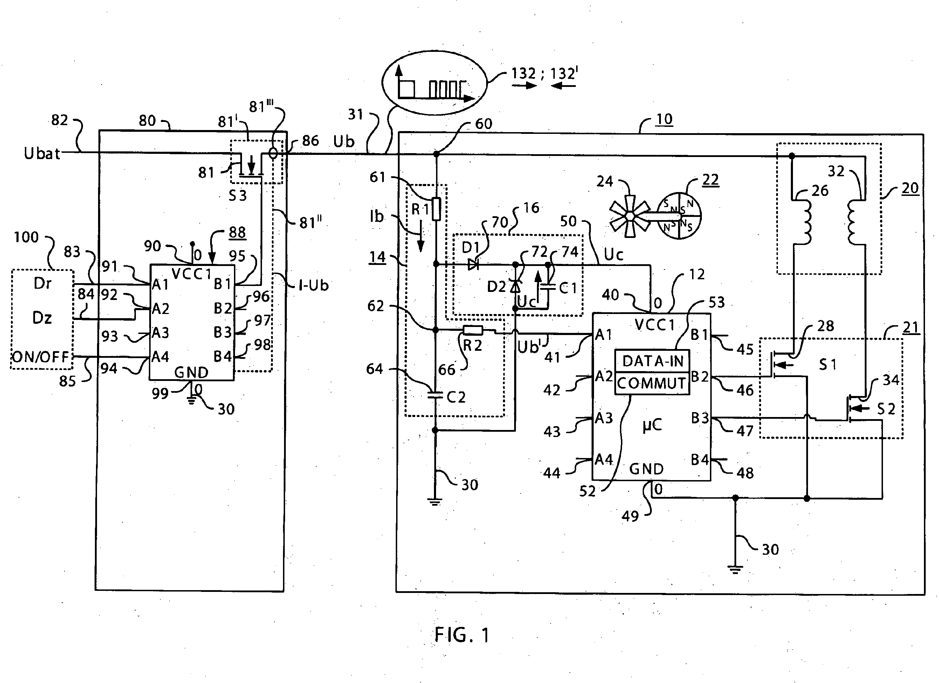

**Fig. 1** zeigt einen Motor 10 und ein Steuergerät 80.

Der Motor 10 hat einen Mikrocontroller oder Mikroprozessor, im Folgenden Mikrocontroller µC 12 genannt, eine Aufbereitungsschaltung 14 für die Messung der Versorgungsspannung, eine Pufferschaltung 16 als Energiespeicher für die Stromversorgung des µC 12, einen Stator 20, eine Endstufe 21 und einen permanentmagnetischen Rotor 22, der z.B. ein Lüfterrad 24 antreibt.

Der Stator 20 hat einen ersten Wicklungsstrang 26, der zwischen einer Versorgungsleitung 31 mit der Versorgungsspannung Ub und einem ersten Endstufen-Schalter (z.B. MOSFET) 28 angeordnet ist, der wiederum mit Masse 30 (GND) verbunden ist. Weiterhin hat der Stator 20 einen zweiten Wicklungsstrang 32, der zwischen der Versorgungsleitung 31 und einem zweiten Endstufen-Schalter (z.B. MOSFET) 34 angeordnet ist, der wiederum mit Masse 30 (GND) verbunden ist.

Der µC 12 hat einen Anschluss 40 für die Spannungsversorgung Uc (Betriebsspannung des µC) über die Leitung 50, vier wahlweise analoge oder digitale Eingänge 41, 42, 43, 44, vier digitale Ausgänge 45, 46, 47, 48 und einen Anschluss 49 zur Verbindung mit der Masse 30.

Der Ausgang 46 ist mit dem Steueranschluss (dem Gate bei einem MOSFET) des Endstufen-Schalters 28 und der Ausgang 47 mit dem Steueranschluss (dem Gate bei einem MOSFET) des Endstufen-Schalters 34 verbunden, und über die Ausgänge 46 und 47 kann entsprechend die Bestromung der Stränge 26 und 32 gesteuert werden, was durch den Funktionsblock "COMMUT" 52 für die Kommutierung der Endstufe 21 bzw. allgemeiner die Motorsteuerung angedeutet ist.

Die Aufbereitungsschaltung 14 begrenzt den in den Eingang 41 fließenden Strom und führt eine Entstörung von Störspitzen durch. Falls erforderlich, wird der Spannungsbereich der Versorgungsspannung Ub an der Leitung 31 (z.B. 0 .. 30 V) in einen durch den µC 12 auswertbaren Bereich (z.B. 0 .. 5 V) transformiert, beispielsweise durch einen Spannungsteiler. Das resultierende Signal Ub' wird dem Eingang 41 zugeführt und im µC 12 durch die Signalfolgeempfangsvorrichtung "DATA_IN" 53 bzw. den entsprechenden Funktionsblock ausgewertet. Der Eingang 41 ist in diesem Fall digital.

Ein Widerstand 61 ist einerseits mit einem Punkt 60 der Leitung 31 und andererseits mit einem Punkt 62 verbunden, der wiederum über einen Widerstand 66 mit dem Eingang 41 des µC 12 verbunden ist. Der Punkt 62 ist über einen Kondensator 64 mit Masse GND 30 verbunden. Durch die Widerstände 61 und 66 wird die Spannung am Eingang 41 z.B. auf 5,6 V begrenzt, und durch den Kondensator 64 wird eine Entstörung durch Herausfiltern von Störspitzen bewirkt.

Die Pufferschaltung 16 hat eine Diode 70, deren Anode mit dem Punkt 62 und deren Kathode mit der Leitung 50 verbunden ist. Eine Zenerdiode 72 ist über die Kathode mit der Leitung 50 und über die Anode mit Masse GND 30 verbunden, und ein Kondensator 74 ist zur Zenerdiode 72 parallel geschaltet.

Der Speicherkondensator bzw. Energiepuffer 74 der Pufferschaltung 16 wird über den Strombegrenzungswiderstand 61 und die Diode 70 aufgeladen, wenn die Versorgungsspannung Ub an der Leitung 31 größer als die Spannung Uc am Kondensator 74 ist. Im umgekehrten Fall verhindert die Diode 70 eine Entladung des Kondensators 74. Durch die Zenerdiode 72 wird die Spannung Uc z.B. auf 5 V begrenzt, um eine Zerstörung des µC 12 zu verhindern.

Durch die Pufferschaltung 16 wird ein kurzzeitiges Abschalten der Versorgungsspannung Ub ermöglicht, ohne dass der µC 12 dabei ausgeschaltet bzw. zurückgesetzt wird. Dies ermöglicht eine Signalübertragung über die Leitung 31 ohne eine zusätzliche Pufferbatterie.

Das Steuergerät 80 hat einen Eingang 82, der z.B. in einem Auto mit der Spannung Ubat einer Batterie verbunden ist, einen Eingang 83 zur Eingabe eines Drehrichtungssignals Dr, einen Eingang 84 zur Eingabe eines Solldrehzahlsignals Dz, einen Eingang 85 zur Eingabe eines Ein-/Aus-Signals "on/off" und einen Ausgang 86, der mit der Leitung 31 zum Motor 10 verbunden ist.

Das - vereinfacht dargestellte - Steuergerät 80 hat einen Schalter 81 und einen µC 88. Der Schalter 81 ist dazu ausgebildet, eine Unterbrechung oder eine Verbindung zwischen dem Eingang 82 (Ubat) und dem Ausgang 86 (Ub) zu ermöglichen. Der Schalter 81 ist z.B. ein MOSFET vom Typ VND5160. Ein solcher so genannter Highside Driver 81' enthält neben dem MOSFET zusätzliche Schaltungselemente wie eine Überwachungsfunktion, einen Überspannungsschutz und eine Strommessvorrichtung 81"' zur Messung des durch den MOSFET 81 fließenden Stroms I_Ub. Eine Übertragung des gemessenen Stromwerts I_Ub vom Highside Driver 81' bzw. der Strommessvorrichtung 81"' über die Leitung 81 " an den µC 30 ist schematisch dargestellt.

Der µC 88 hat einen Anschluss 90 zum Anschluss an eine Versorgungsspannung Vcc, vier wahlweise analoge oder digitale Eingänge 91, 92, 93, 94, vier digitale Ausgänge 95, 96, 97, 98 und einen Anschluss 99 zum Anschluss an Masse GND 30. Der µC 88 dient als Signalfolgesendeeinrichtung zur Übertragung von Daten an den Elektromotor 10 und ggf. auch als Signalfolgeempfangsvorrichtung zum Empfang von Daten vom Elektromotor 10.

Der Eingang 91 ist mit dem Eingang 83 (Dr), der Eingang 92 mit dem Eingang 84 (Dz) und der Eingang 94 mit dem Eingang 85 (on/off) verbunden, und der µC 88 steuert in Abhängigkeit von diesen Signalen den Schalter 81, um über die Spannungsversorgungsleitung 31 dem Motor 10 entsprechende Daten wie z.B. Drehzahl, Drehrichtung, Ein-/Ausschalten zu übertragen. Die Eingabe der Signale Dr 83, Dz 84 und on/off 85 kann z.B. auch über eine Schnittstelle zu einem LIN-Bus oder einem CAN-Bus realisiert sein. Die Werte DR, Dz und on/off kommen z.B. von einem übergeordneten Steuergerät 100.

Es folgen Beispielwerte für die verwendeten Bauteile:
Widerstände:
   - 61: 470 Ohm
   - 66: 10 kOhm
Diode:
   - 70: BAW56
Zenerdiode
   - 72: BZX384-B5V1
Kondensatoren:
   - 64: 10 nF
   - 74: 390 nF
MOSFETs:
   - 28: S12308DS
   - 34: S12308DS
   - 81: VND5160
µCs:
   - 12: MC9RS08KA
   - 88: MC9RS08KA

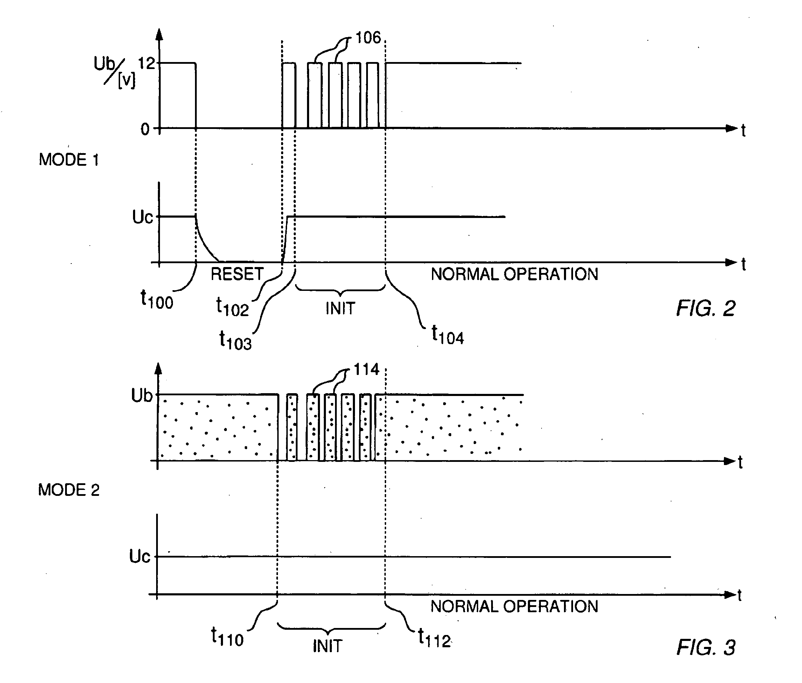

**Fig. 2** zeigt zwei Diagramme mit der Versorgungsspannung Ub an der Leitung 31 und der Spannung Uc am Speicherkondensator 74, jeweils aufgetragen über die Zeit t.

Zum Zeitpunkt t₁₀₀ wird die Versorgungsspannung Ub auf 0 V (GND) gesetzt und bis zum Zeitpunkt t₁₀₂ auf 0 V gehalten, um die Spannung Uc so weit zu verringern, dass ein Reset des µC 12 erfolgt. Zum Zeitpunkt t₁₀₂ wird die Spannung Ub wieder auf 12 V (High) gesetzt, wodurch die Spannung Uc ansteigt und der µC 12 gestartet wird und ggf. Initialisierungsroutinen durchführen kann. Zwischen den Zeitpunkten t₁₀₃ und t₁₀₄ erfolgt eine digitale Datenübertragung mit einem Signal 106, indem die Spannung Ub auf vorgegebene Weise zwischen einem ersten Zustand Low (z.B. 0 V oder 0,9 V) und einem zweiten Zustand High (z. B. 12 V) hin- und hergeschaltet wird und der µC 12 daraus z.B. die gewünschte Drehrichtung Dr und Drehzahl Dz ermittelt.

Ab dem Zeitpunkt t₁₀₄ erfolgt der normale Lüfterbetrieb, und der Elektromotor 10 wird entsprechend den Vorgaben angesteuert.

**Fig. 3** zeigt in gleicher Weise die Spannungen Ub und Uc über die Zeit t.

Anders als in Fig. 2 erfolgt jedoch vor der Datenübertragung kein Reset des µC 12, sondern dieser überwacht ständig die Spannung Ub am Eingang 41, und beim ersten Wechsel der Spannung Ub von 12 V auf 0 V zum Zeitpunkt t₁₁₀ führt der µC 12 eine Auswertung der digitalen Signalimpulse 114 durch.

Nach dem Zeitpunkt t₁₁₂ wird der Lüfterbetrieb entsprechend den übermittelten Betriebswerten geändert bzw. fortgesetzt.

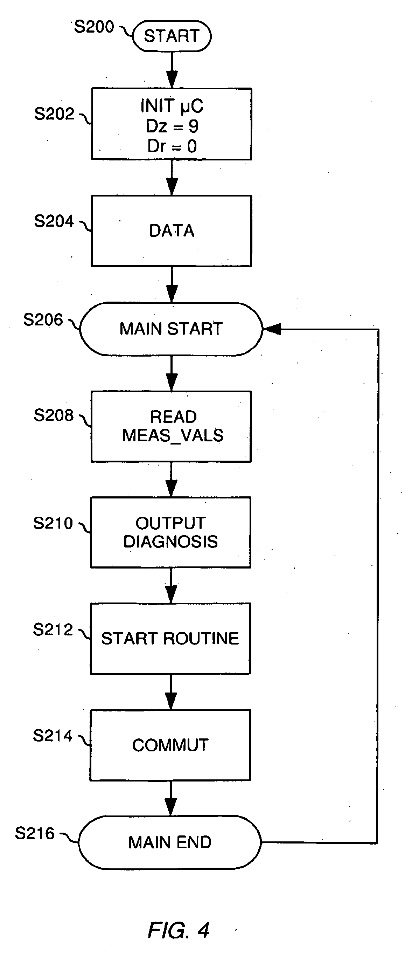

**Fig. 4** zeigt das Hauptprogramm, das im µC 12 abläuft. Beispielhaft ist eine Datenübertragung gemäß Fig. 2 mit einem Reset des µC 12 gezeigt.

Das Programm startet im Schritt S200, und im Schritt S202 werden die Drehzahlvariable Dz auf den Wert 9 und die Drehrichtungsvariable Dr auf den Wert 0 (Default-Werte) gesetzt, und der µC 12 wird initialisiert. Insbesondere werden die Eingänge 41 bis 44 sowie die Ausgänge 45 bis 48 eingestellt (Endstufe ausgeschaltet), und es werden z.B. Interrupt-Routinen initialisiert.

Im Schritt S204 findet die eigentliche Datenübertragung vom Steuergerät 80 zum Motor 10 statt, und anschließend beginnt im Schritt S206 das Hauptprogramm bzw. die Hauptschleife ("MAIN START").

Im Schritt S208 werden Messwerte eingelesen, es wird insbesondere über die Widerstände 61 und 66 die Spannung Ub gemessen. Da die Drehzahl abhängig von der Spannung Ub ist, kann bei einfachen Motoren z.B. die Ansteuerung der Endstufe 28 geändert werden, wenn die gemessene Spannung Ub absinkt, um einem Absinken der Drehzahl entgegenzuwirken.

Im Schritt S210 ("OUTPUT DIAGNOSIS") wird optional ein Diagnose-Signal von dem Motor 10 an das Steuergerät 80 ausgegeben, indem z.B. bei einem erfolgreichen Anlauf des Motors 10 der über die Leitung 31 fließende Strom durch Ein- und Ausschalten des Schalters 28 in vorgegebener Weise impulsförmig gesteuert wird. Ein Steuergerät 80 mit einer Strommessvorrichtung 81' wertet dann über die Strommessung dieses getaktete Signal aus und gibt z.B. über die Schnittstellen 83, 84 und 85 bzw. eine CAN- oder LIN-Schnittstelle einen entsprechenden Wert an das übergeordnete Steuergerät 100 aus. In gleicher Weise können auch andere Daten, Motorparameter und Anforderungen an das Steuergerät übertragen werden. Bei dieser Art der Datenübertragung sollte der Schalter 81 bevorzugt nicht gleichzeitig getaktet werden, um die Auswertung des Stroms 1_Ub zu erleichtern. Die Datenübertragung von Datenwerten (z.B. Status, Ist-Drehzahl) bzw. entsprechenden Signalfolgen vom Motor 10 zum Steuergerät 80 geschieht entweder an Stelle von der normalen Kommutierung, oder aber während der normalen Bestromung des Motors 10, jedoch z.B. mit einem Takt mit einer so hohen Frequenz, wie sie üblicherweise nicht bei der Kommutierung vorkommt. So kann das Steuergerät 80 die Datenwerte jederzeit empfangen. Hierfür hat der µC 30 des Steuergeräts 80 eine entsprechende Daten-Auswerteroutine wie der µC 12, und der µC 12 dient auch als Signalfolgesendevorrichtung.

Anschließend erfolgt im Schritt S212 ("START ROUTINE") ggf. der Start bzw. das Anlaufen des Motors. Hierbei wird die Endstufe im Falle einer Änderung der Drehrichtung durch die Datenübertragung ausgeschaltet, bis der Motor 10 steht, und anschließen wird er neu gestartet. Für den Fall einer Änderung der Soll-Drehzahl durch die Datenübertragung bei gleich bleibender Drehrichtung ist ein Anhalten des Motors nicht erforderlich. Im Schritt S214 erfolgt die Kommutierung in Abhängigkeit von den Variablen Dz und Dr.

Im Schritt S216 endet das Hauptprogramm bzw. die Hauptschleife, und es erfolgt ein Sprung zurück zum Schritt S206.

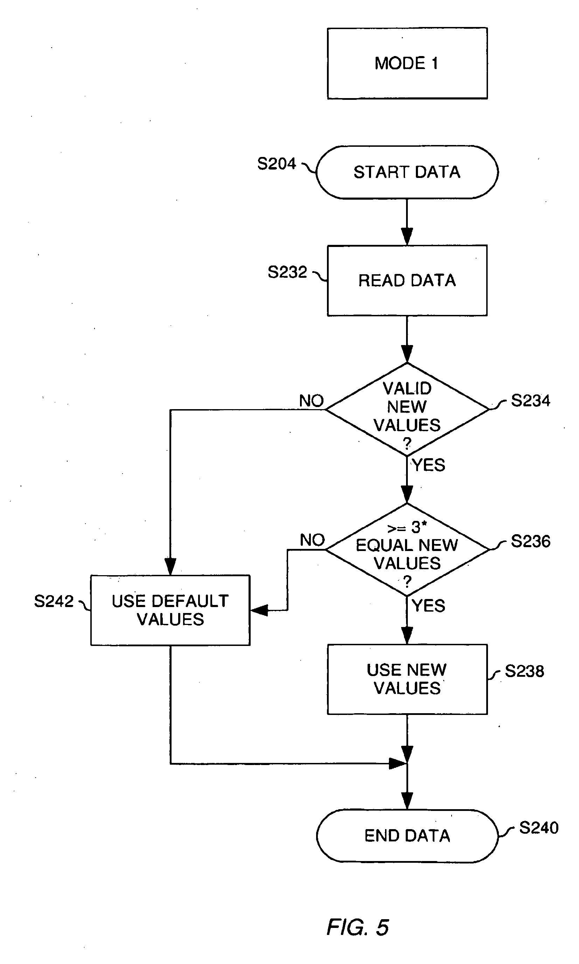

**Fig. 5** zeigt die Routine "START DATA" S204 für eine Datenübertragung gemäß Fig. 2.

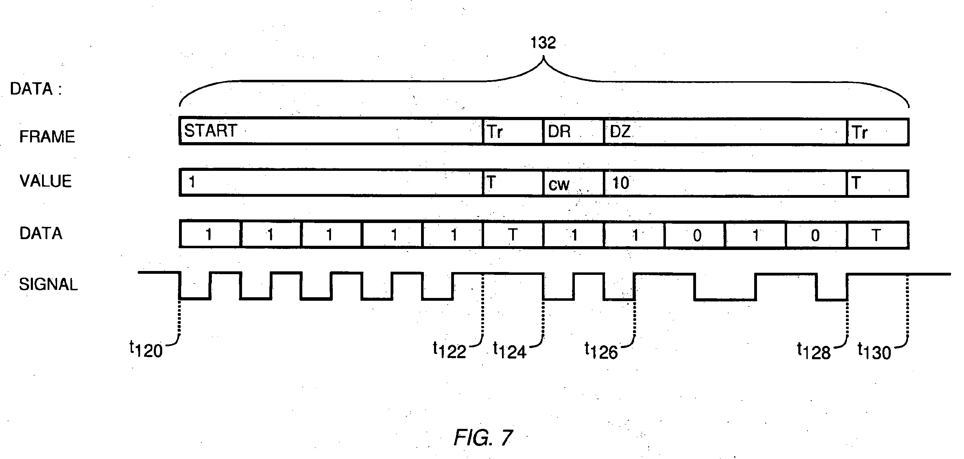

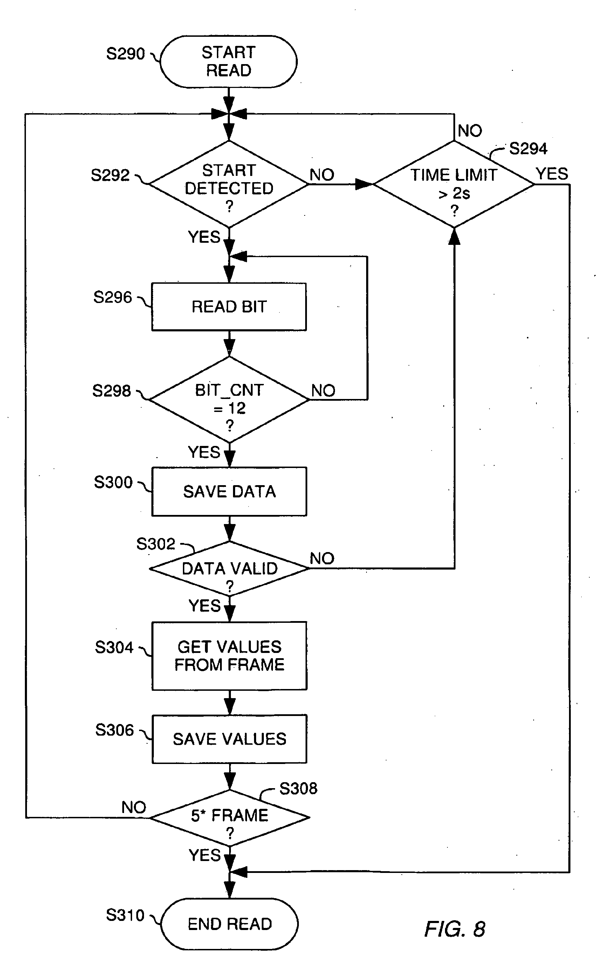

Im Schritt S232 erfolgt der eigentliche Empfang der Daten, wie das in Fig. 7 und Fig. 8 beschrieben ist. Die entsprechenden Daten werden z.B. fünfmal übertragen.

Im Schritt S234 wird überprüft, ob die übertragenen Daten gültige Werte haben. Falls Ja, wird zum Schritt S236 gesprungen, falls Nein, wird zum Schritt S242 gesprungen. Im Schritt S236 wird überprüft, ob mindestens drei der fünf empfangenen Sendungen gleiche Werte aufweisen. Falls Ja, werden im Schritt S238 die entsprechenden Werte übernommen. Falls Nein, wird zum Schritt S242 gesprungen, und die Motorvariablen werden auf Default-Werte gesetzt. Von den Schritten S238 bzw. S242 erfolgt ein Sprung zum Schritt S240, und die Routine wird beendet.

Ein Ausschalten der Endstufe 21 ist bei dieser Routine nicht erforderlich, da sie nach der Initialisierung in S202 der Fig. 4 bereits ausgeschaltet ist.

Durch die redundante, fünffache Übertragung der Daten und die anschließenden Tests, ob mindestens drei der Übertragungen die gleichen Werte aufweisen, wird eine sichere Übertragung bzw. Fehlerkorrektur ermöglicht. Alternativ oder auch zusätzlich kann die Fehlerkorrektur über das Einfügen eines Parity-Bits oder eines Checksummenwerts in den Frame realisiert werden.

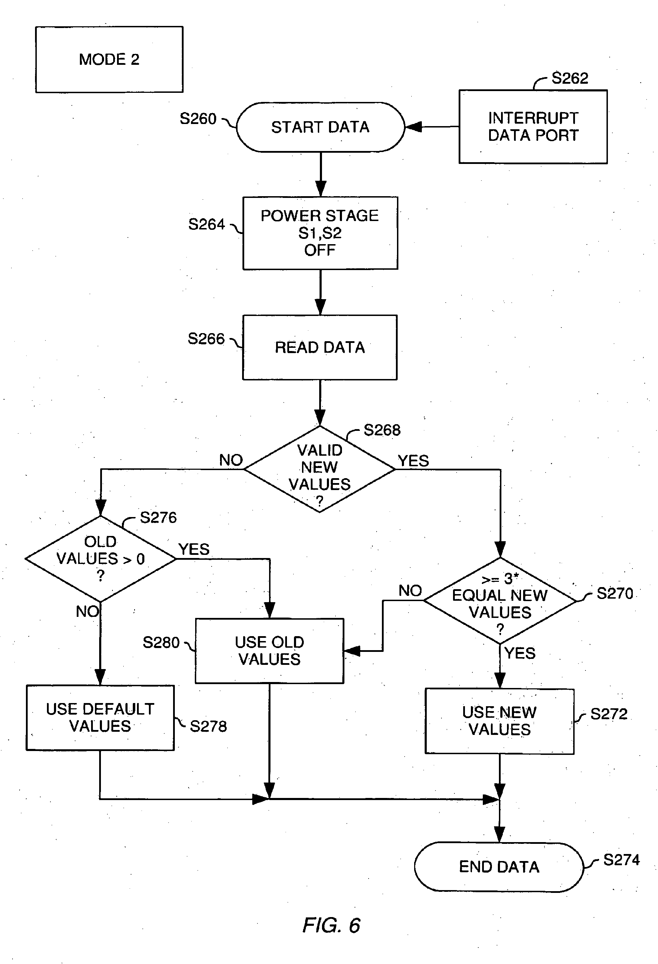

**Fig. 6** zeigt eine Datenübertragungsroutine S260 bei einer Datenübertragung gemäß Fig. 3.

Der Eingang 41 des µC 12 ist bei der Initialisierung derart eingestellt worden, dass ein Interrupt S262 ausgelöst wird, sobald die Spannung Ub auf 0 V fällt. Die Routine S260 ist als Interrupt-Routine realisiert. Im Schritt S264 werden die Schalter 28 und 34 der Endstufe 21 ausgeschaltet, so dass der Rotor 22 frei drehen kann und die Messung des Signals Ub nicht durch Kommutierungsvorgänge beeinträchtig wird. Auf Grund der Trägheit des Rotors 22 kann z.B. bei einem Lüfter eine Unterbrechung der Bestromung für 200 ms stattfinden, ohne dass der Rotor seine Drehzahl zu stark ändert.

Im Schritt S266 geschieht das eigentliche Einlesen der Daten, vgl. Fig. 7 und Fig. 8.

Im Schritt S268 wird überprüft, ob die empfangenen Daten gültige Werte haben. Falls Ja, erfolgt ein Sprung nach S270, falls Nein, erfolgt ein Sprung nach S276. In S270 wird wie in Fig. 5 überprüft, ob mindestens drei der fünf empfangenen Datensätze übereinstimmen. Falls Ja, werden die neuen Werte in S272 übernommen. Falls Nein, erfolgt ein Sprung nach S280, und die alten Werte behalten ihre Gültigkeit.

In S276 wird überprüft, ob die alten Werte größer als 0 sind. Falls Nein, wurden die alten Werte noch nicht initialisiert, und in S278 werden Default-Werte gesetzt. Falls Ja, erfolgt ein Sprung nach S280. Von den Schritten S278, S272 und S280 erfolgt ein Sprung zum Ende S274.

**Fig. 7** zeigt ein Protokoll für die Übertragung eines Drehrichtungswerts Dr und eines Drehzahlwerts Dz mit verschiedenen Abstraktionsstufen bis hinunter zum eigentlichen Signal Ub.

Ein Rahmen 132 (Englisch: frame) zur Übertragung der Werte Dr und Dz enthält einen Startwert "Start", einen Trennwert "Tr", einen Drehrichtungswert "Dr", einen Drehzahlwert "Dz" sowie einen weiteren Trennwert "Tr".

Im Beispiel wird als Startwert "Start" fünfmal der Wert "1" übertragen, als Trennwert jeweils ein Wert "T", als Drehrichtungswert Dr der Wert "cw" (Drehung im Uhrzeigersinn), als Drehzahlwert Dz der Wert "10".

Bei der Drehrichtung wird gemäß dem Protokoll eine 1 übertragen wenn der Motor im Uhrzeigersinn ("cw") drehen soll, und eine 0 für eine Drehung gegen den Uhrzeigersinn ("ccw").

Bei der Drehzahl werden vier Bit übertragen, und der maximale dezimale Wert 15 entspricht der maximalen Drehzahl des entsprechenden Motors. Um dies zu erreichen, wird z. B. der Drehzahlwert Dz mit dem Wert 100/15 = 6,66 multipliziert, und das Ergebnis ergibt den Prozentsatz bezüglich der maximalen Drehzahl Nmax. Somit ergibt z.B. Dz = 5 eine Motordrehzahl von 5 * 6,66 % = 33,3 % von Nmax.

In der Zeile "Daten" ist die entsprechenden logische Signalfolge wiedergegeben, also als Startwert fünf mal die 1, als Trennwert ein T, als Drehrichtungswert Dr eine 1, als Drehzahlwert Dz die Folge "1, 0, 1, 0" (binäre Darstellung des dezimalen Werts 10) und als abschließender Trennwert der Wert T.

In der untersten Zeile "Signal" ist die digitale Signalfolge bzw. die Impulsfolge wiedergegeben, die über die Leitung 31 übermittelt wird. Der logische Wert "1" wird durch einen Wechsel von LOW nach HIGH dargestellt, wobei z.B. jeweils 1 ms das Signal auf LOW und anschließend 1 ms auf HIGH ist. In gleicher Weise wird der logische Wert "0" durch 1 ms HIGH und anschließend 1 ms LOW dargestellt. Als logischer Trennwert "T" wird das Signal 2 Millisekunden lang auf HIGH gesetzt.

Im vorliegenden Beispiel wird zwischen den Zeitpunkten t₁₂₀ und t₁₂₂ fünf mal der logische Wert 1 übertragen, zwischen den Zeitpunkten t₁₂₂ und t₁₂₄ der Wert T, zwischen den Zeitpunkten t₁₂₄ und t₁₂₆ der Wert 1, zwischen den Zeitpunkten t₁₂₆ und t₁₂₈ die Werte 1, 0, 1, 0 und abschließend zwischen den Zeitpunkten t₁₂₈ und t₁₃₀ ein logischer Wert "T".

Wie in Fig. 5, S232 und S236 sowie in Fig. 6, S266 und S270 beschrieben, wird der Frame 132 z.B. fünfmal hintereinander übertragen, um eine Fehlerkorrektur zu ermöglichen. Da in einem Frame 12 Bit übertragen werden und jedes Bit 2 ms benötigt, benötigt ein Frame 24 ms. Die Übertragung von fünf Frames 132 benötigt somit 120 ms, und in diesem Zeitraum ändert sich die Drehzahl eines Lüfters nur wenig.

Natürlich kann der Aufbau der Frames, die Bedeutung der Werte, die Definition der Daten bzw. des entsprechenden Signals sowie das gesamte Protokoll auch anders definiert werden. Mit der vorliegenden Definition des gesamten Protokolls konnte für den µC 12 ein einfacher und damit auch billiger µC vom Typ MC9RS08KA verwendet werden.

**Fig. 8** zeigt die Routine S290 zur Auswertung des empfangenen Signals Ub.

In S292 wird überprüft, ob ein Startwert "Start" (z.B. fünfmal der Wert 1 beim Modus gemäß Fig. 2 bzw. ein Pegelwechsel beim Modus gemäß Fig. 3) gesendet wird. Falls nicht, erfolgt ein Sprung nach S294, und dort wird überprüft, ob bereits zwei Sekunden seit dem Beginn der Routine S290 vergangen sind. Falls Ja, erfolgt ein Sprung zum Ende S310, falls Nein, erfolgt ein Sprung zurück nach S292.

Wurde in S292 dagegen erkannt, dass eine Datenübertragung stattfindet, wird in S296 ein Bit eingelesen. In S298 wird überprüft, ob bereits 12 Bit und damit ein gesamtes Frame 132 eingelesen wurden. Falls Nein, erfolgt ein Sprung zurück zu S296. Falls Ja, werden in S300 die empfangenen Daten gespeichert und im Schritt S302 überprüft, ob die Daten gültig sind. Falls Nein, erfolgt ein Sprung nach S294. Falls Ja, werden in S304 die Werte Dr und Dz aus dem Frame separiert und in S306 gespeichert. In S308 wird überprüft, ob bereits fünf Frames übertragen wurden. Falls Nein, erfolgt ein Sprung zurück zu S292. Falls Ja, erfolgt ein Sprung zum Ende S310.

Beim Verlassen der Routine S290 liegen somit fünf Werte für die Drehrichtung Dr und fünf Werte für die Drehzahl Dz vor.

Naturgemäß sind im Rahmen der vorliegenden Erfindung vielfältige Abwandlungen und Modifikationen möglich.

So kann für den Eingang 41 des µC 12 ein analoger oder aber ein digitaler Eingang verwendet werden. Es kann für einfache Anwendungsfälle nur eine Datenübertragung gemäß Fig. 2 mit vorherigem Reset des µC 12 vorgesehen werden. Hierdurch kann ein sehr einfacher und damit günstiger µC 12 verwendet werden. Es kann aber auch nur eine Datenübertragung gemäß Fig. 3 vorgesehen werden.

## Patentansprüche

1. Anordnung mit einem Elektromotor (10), welcher einen Rotor (22), einen Stator (20) und eine Endstufe (21) mit Endstufenschaltern (28, 34) aufweist und welchem eine Motorsteuerung (52) und eine Versorgungsleitung (31) zugeordnet sind, welche dazu ausgebildet sind, zum einen eine Stromversorgung der Motorsteuerung (52) und des Elektromotors (10) und zum anderen eine Übertragung einer digitalen Signalfolge zum Elektromotor (10) mittels Änderung des Potenzials der Versorgungsleitung (31) in Form eines impulsförmigen Wechsels zwischen mindestens einem ersten höheren und einem zweiten niedrigeren Potenzial zu ermöglichen,
ferner mit einer Signalfolge-Empfangsvorrichtung (53), welche dazu ausgebildet ist, eine über die Versorgungsleitung (31) übertragene Signalfolge auszuwerten und daraus mindestens einen Motorparameter für den Betrieb des Elektromotors (10) zu ermitteln,
und mit einem Speicherglied (74) zum Speichern von Energie aus der Versorgungsleitung (31), um den Betrieb der Signalfolge-Empfangsvorrichtung (53) auch dann zu ermöglichen, wenn an der Signalfolge-Empfangsvorrichtung (53) zeitweise das zweite niedrigere Potenzial anliegt,
welche Signalfolge-Empfangsvorrichtung (12) dazu ausgebildet ist, die Einleitung der Übertragung eines Motorparameters zum Elektromotor (10) durch einen Wechsel des Potenzials an der Versorgungsleitung (31) von dem ersten höheren zum zweiten niedrigeren Potenzial zu ermöglichen,
und welche Signalfolge-Empfangsvorrichtung (12) dazu ausgebildet ist, während der Übertragung einer digitalen Signalfolge zum Elektromotor (10) die Endstufenschalter (28, 34) der Endstufe (21) auszuschalten und so die Energiezufuhr zur Endstufe (21) des Elektromotors (10) über die Versorgungsleitung (31) zu unterbrechen.

2. Anordnung nach Anspruch 1, bei welchem die Signalfolge-Empfangsvorrichtung (12) dazu ausgebildet ist, zur Einleitung der Übertragung eines Motorparameters zum Elektromotor (10) zurückgesetzt zu werden, indem das Potenzial an der Versorgungsleitung (31) während einer vorgegebenen Zeitdauer auf das zweite, niedrigere Potenzial gesetzt und das Speicherglied (74) entladen wird.

3. Anordnung nach Anspruch 1 oder 2, bei welchem dem Elektromotor eine Aufbereitungsschaltung (14) zur Messung der Spannung (Ub) an der Versorgungsleitung (31) zugeordnet ist, und bei welchem die Signalfolge-Empfangsvorrichtung (12) über die Aufbereitungsschaltung (14) die Spannung (Ub) an der Versorgungsleitung überwacht, ob eine digitale Signalfolge über die Versorgungsleitung (31) übertragen wird.

4. Anordnung nach einem der vorhergehenden Ansprüche, bei welcher die Signalfolge-Empfangsvorrichtung (53) eine Fehlerkorrekturvorrichtung (S236; S270) aufweist.

5. Anordnung nach einem der vorhergehenden Ansprüche, bei welcher die Signalfolge-Empfangsvorrichtung (53) dazu ausgebildet ist, eine digitale Signalfolge auszuwerten, die zwischen der Betriebsspannung im normalen Betrieb des Elektromotors (10) und einer Spannung von weniger 0,9 V hin- und herwechselt.

6. Anordnung nach einem der vorhergehenden Ansprüche, mit einem Steuergerät (80), welches zur Datenübertragung zu oder von einem Elektromotor (10) über eine Versorgungsleitung (31) ausgebildet ist, über welche Versorgungsleitung der Elektromotor (10) mit Energie versorgt wird, welches Steuergerät aufweist:
Einen Schalter (81) zur Unterbrechung der Versorgungsleitung (31), eine Signalfolge-Sendevorrichtung (88) zur Ansteuerung dieses Schalters (81) abhängig von an den Elektromotor (10) zu übertragenden Daten,
eine Strommessvorrichtung (81 "') zur Messung des Stromes (I_Ub) auf der Versorgungsleitung (31),
und eine Signalfolge-Empfangsvorrichtung zur Auswertung des Signals der Strommessvorrichtung (81 "') und zur Ermittlung der vom Elektromotor (10) übertragenen Daten.

7. Verfahren zur Übertragung mindestens eines Motorparameters von einem Steuergerät (80) zu einem Elektromotor (10) über eine Versorgungsleitung (31), über welche die Versorgung des Elektromotors (10) mit elektrischer Energie (Ub) erfolgt, wobei der Elektromotor (10) eine Endstufe (21) mit Endstufenschaltern (28, 34) aufweist,
welches Verfahren folgende Schritte aufweist:
A) der Motorparameter (Dr, Dz, on/off) wird in eine digitale Signalfolge (132) umgewandelt;
B) die digitale Signalfolge (132) wird über die Versorgungsleitung (31) übertragen, indem das Potenzial (Ub) an der Versorgungsleitung (31) abhängig von der zu übertragenden Signalfolge (132) zwischen mindestens einem ersten höheren und einem zweiten niedrigeren Potenzial impulsförmig hin- und hergewechselt wird;
C) durch die Signalfolge-Empfangsvorrichtung (12) wird überwacht, ob eine digitale Signalfolge über die Versorgungsleitung (31) übertragen wird;
D) durch die Signalfolge-Empfangsvorrichtung (12) werden die Endstufenschalter (28, 34) der Endstufe (21) ausgeschaltet und so die Stromzufuhr zur Endstufe (21) des Elektromotors (10) über die Versorgungsleitung (31) unterbrochen, sobald die Signalfolge-Empfangsvorrichtung (12) den Beginn einer Übermittlung einer digitalen Signalfolge erkannt hat;
E) nach der Übertragung wird der Elektromotor (10) über die Versorgungsleitung (31) und abhängig von dem mindestens einen übertragenen Motorparameter bestromt;
F) ferner mit einem Speicherglied (74) und einer Signalfolge-Empfangsvorrichtung (12) bei welchem Verfahren das Speicherglied (74) über die Versorgungsleitung (31) aufgeladen wird,
und bei welchem die Signalfolge-Empfangsvorrichtung (12) mittels Energie aus diesem Speicherglied (74) weiter betrieben wird, wenn bei der Übertragung der digitalen Signalfolge (132) das Potenzial an der Versorgungsleitung (31) auf dem zweiten, niedrigeren Potenzial ist.

8. Verfahren nach Anspruch 7, bei welchem zur Einleitung der Übertragung eines Motorparameters die Signalfolge-Empfangsvorrichtung (12) zurückgesetzt wird, indem das Potenzial an der Versorgungsleitung (31) während einer vorgegebenen Zeitdauer auf das zweite, niedrigere Potenzial gesetzt und das Speicherglied (74) entladen wird.

9. Verfahren nach einem der Ansprüche 7 oder 8, bei welchem bei der Übertragung eines Motorparameters eine Fehlererkennung durchgeführt wird.

10. Verfahren nach Anspruch 9, bei welchem die digitale Signalfolge mehrmals übertragen wird, und bei welchem der übertragene Motorparameter nur akzeptiert wird, wenn bei einer vorgegebenen Zahl von Übertragungen der Wert des übertragenen Motorparameters überein stimmt.

11. Verfahren nach Anspruch 9 oder 10, bei welchem ein Defaultwert für den Motorparameter geladen wird, wenn der übertragene Motorparameter von der Fehlererkennung nicht akzeptiert wird.

12. Verfahren nach Anspruch 9 oder 10, bei welchem der bisherige Wert des Motorparameters beibehalten wird, wenn der übertragene Motorparameter von der Fehlererkennung nicht akzeptiert wird.

13. Verfahren nach einem der Ansprüche 7 bis 12, zur Übertragung mindestens eines Datenwerts von einem Elektromotor (10) mit einem Endstufenschalter (28) zu einem Steuergerät (80) über eine Versorgungsleitung (31), über welche die Versorgung des Elektromotors (10) mit einer Gleichspannung (Ub) erfolgt, welches Verfahren folgende Schritte aufweist:
A) der Datenwert wird in eine digitale Signalfolge (132') umgewandelt;
B) die digitale Signalfolge (132') wird über die Versorgungsleitung (31) übertragen, indem der über die Versorgungsleitung (31) fließende Strom (I_Ub) abhängig von der digitalen Signalfolge durch Ein- und Ausschalten des Endstufenschalters (28) impulsförmig erhöht und erniedrigt wird;
C) in dem Steuergerät (80) wird der über die Versorgungsleitung (31) fließende Strom (i_Ub) gemessen und daraus der übertragene Datenwert ermittelt.

## Claims

1. Arrangement having an electric motor (10), which comprises a rotor (22), a stator (20) and an output stage (21) having output stage switches (28, 34) and which is assigned a motor control (52) and a supply line (31) which are configured, on the one hand, to enable a power supply of the motor control (52) and of the electric motor (10) and, on the other hand, a transmission of a digital signal sequence to the electric motor (10) by means of changing the potential of the supply line (31) in the form of a pulse-shaped change between at least one first higher and one second lower potential,
further having a signal sequence-receiving device (53), which is configured to evaluate a signal sequence transmitted via the supply line (31) and from this to determine at least one motor parameter for the operation of the electric motor (10),
and having a storage element (74) for storing energy from the supply line (31), in order to enable the operation of the signal sequence-receiving device (53) even when the second lower potential is present temporarily at the signal sequence-receiving device (53),
which signal sequence-receiving device (12) is configured to enable the initiation of the transmission of a motor parameter to the electric motor (10) by a change of the potential at the supply line (31) from the first higher to the second lower potential,
and which signal sequence-receiving device (12) is configured to switch off the output stage switch (28, 34) of the output stage (21) during the transmission of a digital signal sequence to the electric motor (10) and thus interrupt the energy supply to the output stage (21) of the electric motor (10) via the supply line (31).

2. Arrangement according to Claim 1, in which the signal sequence-receiving device (12) is configured to be reset for the initiation of the transmission of a motor parameter to the electric motor (10) by setting the potential at the supply line (31) during a predetermined time period to the second, lower potential and discharging the storage element (74).

3. Arrangement according to Claim 1 or 2, in which the electric motor is assigned a processing circuit (14) for measuring the voltage (Ub) at the supply line (31), and in which the signal sequence-receiving device (12) monitors the voltage (Ub) at the supply line via the processing circuit (14) for whether a digital signal sequence is transmitted via the supply line (31).

4. Arrangement according to one of the preceding claims, in which the signal sequence-receiving device (53) comprises an error correction device (S236; S270).

5. Arrangement according to one of the preceding claims, in which the signal sequence-receiving device (53) is configured to evaluate a digital signal sequence which changes back and forth between the operating voltage in the normal operation of the electric motor (10) and a voltage of less than 0.9 V.

6. Arrangement according to one of the preceding claims, having a control device (80) which is configured for data transmission to or from an electric motor (10) via a supply line (31), via which supply line the electric motor (10) is supplied with energy, which control device comprises:
A switch (81) for interrupting the supply line (31), a signal sequence-transmitting device (88) for controlling this switch (81) depending on data to be transmitted to the electric motor (10),
a current-measuring device (81"') for measuring the current (I_Ub) on the supply line (31),
and a signal sequence-receiving device for evaluating the signal of the current-measuring device (81"') and for determining the data transmitted from the electric motor (10).

7. Method for transmitting at least one motor parameter from a control device (80) to an electric motor (10) via a supply line (31), via which the supply of the electric motor (10) with electrical energy (Ub) is effected, the electric motor (10) comprising an output stage (21) having output stage switches (28, 34), which method comprises the following steps:
A) the motor parameter (Dr, Dz, on/off) is converted into a digital signal sequence (132);
B) the digital signal sequence (132) is transmitted via the supply line (31) by the potential (Ub) at the supply line (31) being changed back and forth in a pulse-shaped manner between at least one first higher and one second lower potential depending on the signal sequence (132) to be transmitted;
C) it is monitored by the signal sequence-receiving device (12) whether a digital signal sequence is transmitted via the supply line (31);
D) the output stage switches (28, 34) of the output stage (21) are switched off by the signal sequence-receiving device (12) and thus the current supply to the output stage (21) of the electric motor (10) via the supply line (31) is interrupted as soon as the signal sequence-receiving device (12) has detected the start of a transmission of a digital signal sequence;
E) after the transmission, the electric motor (10) is supplied with current via the supply line (31) and depending on the at least one transmitted motor parameter;
F) further having a storage element (74) and a signal sequence-receiving device (12), in which method the storage element (74) is charged via the supply line (31),
and in which the signal sequence-receiving device (12) is further operated by means of energy from this storage element (74) when, on the transmission of the digital signal sequence (132), the potential at the supply line (31) is at the second, lower potential.

8. Method according to Claim 7, in which for the initiation of the transmission of a motor parameter, the signal sequence-receiving device (12) is reset by setting the potential at the supply line (31) during a predetermined time period to the second, lower potential and discharging the storage element (74).

9. Method according to one of Claims 7 or 8, in which an error detection is carried out on the transmission of a motor parameter.

10. Method according to Claim 9, in which the digital signal sequence is transmitted a plurality of times, and in which the transmitted motor parameter is only accepted when, on a predetermined number of transmissions, the value of the transmitted parameter corresponds.

11. Method according to Claim 9 or 10, in which a default value for the motor parameter is loaded if the transmitted motor parameter is not accepted by the error detection.

12. Method according to Claim 9 or 10, in which the previous value of the motor parameter is retained if the transmitted motor parameter is not accepted by the error detection.

13. Method according to one of Claims 7 to 12, for transmitting at least one data value from an electric motor (10) with an output stage switch (28) to a control device (80) via a supply line (31), via which the supply of the electric motor (10) with a direct voltage (Ub) is effected, which method comprises the following steps:
A) the data value is converted into a digital signal sequence (132');
B) the digital signal sequence (132') is transmitted via the supply line (31) by the current (I_Ub), which flows via the supply line (31), being increased and decreased in a pulse-shaped manner depending on the digital signal sequence by switching the output stage switch (28) on and off;
C) the current (i_Ub) flowing via the supply line (31) is measured in the control device (80) and from this the transmitted data value is determined.

## Revendications

1. Ensemble comprenant un moteur électrique (10), lequel présente un rotor (22), un stator (20) et un étage final (21) avec des commutateurs d'étage final (28, 34) et auquel sont associées une commande de moteur et une ligne d'alimentation (31), laquelle est conçue pour permettre, d'une part, une alimentation électrique de la commande de moteur (52) et du moteur électrique (10) et, d'autre part, une transmission d'une suite de signaux numériques au moteur électrique (10) au moyen d'une variation du potentiel de la ligne d'alimentation (31) sous la forme d'une alternance impulsionnelle entre au moins un premier potentiel plus élevé et un deuxième potentiel plus bas,
comprenant en outre un dispositif de réception de suites de signaux (53), lequel est conçu pour évaluer une suite de signaux transmise par la ligne d'alimentation (31) et déterminer à partir de cela au moins un paramètre de moteur pour le fonctionnement du moteur électrique (10),
et comprenant un organe de stockage (74) pour stocker de l'énergie provenant de la ligne d'alimentation (31) afin de permettre le fonctionnement du dispositif de réception de suites de signaux (53) même lorsque le deuxième potentiel plus bas est temporairement appliqué au dispositif de réception de suites de signaux (53),
lequel dispositif de réception de suites de signaux (12) est conçu pour permettre le déclenchement de la transmission d'un paramètre de moteur au moteur électrique (10) par une alternance du potentiel sur la ligne d'alimentation (31) du premier potentiel plus élevé au deuxième potentiel plus bas,
et lequel dispositif de réception de suites de signaux (12) est conçu pour désactiver les commutateurs d'étage final (28, 34) de l'étage final (21) et ainsi interrompre l'alimentation en énergie de l'étage final (21) du moteur électrique (10) par la ligne d'alimentation (31) pendant la transmission d'une suite de signaux numériques au moteur électrique (10).

2. Ensemble selon la revendication 1, dans lequel le dispositif de réception de suites de signaux (12) est conçu pour être réinitialisé pour le déclenchement de la transmission d'un paramètre de moteur au moteur électrique (10) en mettant le potentiel sur la ligne d'alimentation (31) au deuxième potentiel plus bas pendant une durée prédéfinie et en déchargeant l'organe de stockage (74).

3. Ensemble selon la revendication 1 ou 2, dans lequel un circuit de traitement (14) pour mesurer la tension (Ub) sur la ligne d'alimentation (31) est associé au moteur électrique et dans lequel le dispositif de réception de suites de signaux (12) surveille par l'intermédiaire du circuit de traitement (14) la tension (Ub) sur la ligne d'alimentation (31) pour savoir si une suite de signaux numériques est transmise par la ligne d'alimentation (31).

4. Ensemble selon l'une des revendications précédentes, dans lequel le dispositif de réception de suites de signaux (53) présente un dispositif de correction d'erreurs (S236 ; S270).

5. Ensemble selon l'une des revendications précédentes, dans lequel le dispositif de réception de suites de signaux (53) est conçu pour évaluer une suite de signaux numériques qui alterne entre la tension de fonctionnement lors du fonctionnement normal du moteur électrique (10) et une tension inférieure à 0,9 V.

6. Ensemble selon l'une des revendications précédentes, comprenant un appareil de commande (80), lequel est conçu pour transmettre des données vers et depuis un moteur électrique (10) par une ligne d'alimentation (31), par laquelle ligne d'alimentation le moteur électrique (10) est alimenté en énergie, lequel appareil de commande présente :
un commutateur (81) pour interrompre la ligne d'alimentation (31),
un dispositif d'émission de suites de signaux (88) pour commander ce commutateur (81) en fonction de données à transmettre au moteur électrique (10),
un dispositif de mesure de courant (81'") pour mesurer le courant (I_Ub) sur la ligne d'alimentation (31),
et un dispositif de réception de suites de signaux pour évaluer le signal du dispositif de mesure de courant (81'") et pour déterminer les données transmises par le moteur électrique (10).

7. Procédé pour transmettre au moins un paramètre de moteur d'un appareil de commande (80) à un moteur électrique (10) par une ligne d'alimentation (31), par laquelle le moteur électrique (10) est alimenté en énergie électrique (Ub), le moteur électrique (10) présentant un étage final (21) avec des commutateurs d'étage final (28, 34),
lequel procédé présente les étapes suivantes :
A) le paramètre de moteur (Dr, Dz, on/off) est converti en une suite de signaux numériques (132) ;
B) la suite de signaux numériques (132) est transmise par la ligne d'alimentation (31) en faisant alterner le potentiel (Ub) sur la ligne d'alimentation (31) de façon impulsionnelle entre au moins un premier potentiel plus élevé et un deuxième potentiel plus bas en fonction de la suite de signaux (132) à transmettre ;
C) le dispositif de réception de suites de signaux (12) surveille si une suite de signaux numériques est transmise par la ligne d'alimentation (31) ;
D) les commutateurs d'étage final (28, 34) de l'étage final (21) sont désactivés par le dispositif de réception de suites de signaux (12) et ainsi l'alimentation en courant de l'étage final (21) du moteur électrique (10) par la ligne d'alimentation (31) est interrompue dès que le dispositif de réception de suites de signaux (12) a détecté le début d'une transmission d'une suite de signaux numériques ;
E) après la transmission, le moteur électrique (10) est alimenté par la ligne d'alimentation (31) et en fonction dudit au moins un paramètre de moteur transmis ;
F) avec en outre un organe de stockage (74) et un dispositif de réception de suites de signaux (12), selon lequel procédé l'organe de stockage (74) est chargé par la ligne d'alimentation (31),
et selon lequel le dispositif de réception de suites de signaux (12) continue de fonctionner au moyen d'énergie provenant de cet organe de stockage (74) lorsque, lors de la transmission de la suite de signaux numériques (132), le potentiel sur la ligne d'alimentation (31) est au deuxième potentiel plus bas.

8. Procédé selon la revendication 7, selon lequel, pour déclencher la transmission d'un paramètre de moteur, le dispositif de réception de suites de signaux (12) est réinitialisé en mettant le potentiel sur la ligne d'alimentation (31) au deuxième potentiel plus bas pendant une durée prédéfinie et en déchargeant l'organe de stockage (74).

9. Procédé selon l'une des revendications 7 ou 8, selon lequel une détection d'erreurs est effectuée lors de la transmission d'un paramètre de moteur.

10. Procédé selon la revendication 9, selon lequel la suite de signaux numériques est transmise plusieurs fois et selon lequel le paramètre de moteur transmis n'est accepté que si la valeur du paramètre de moteur transmis concorde lors d'un nombre prédéfini de transmissions.

11. Procédé selon la revendication 9 ou 10, selon lequel une valeur par défaut du paramètre de moteur est chargée si le paramètre de moteur transmis n'est pas accepté par la détection d'erreurs.

12. Procédé selon la revendication 9 ou 10, selon lequel la valeur précédente du paramètre de moteur est conservée si le paramètre de moteur transmis n'est pas accepté par la détection d'erreurs.

13. Procédé selon l'une des revendications 7 à 12, pour transmettre au moins une valeur de donnée d'un moteur électrique (10) présentant un commutateur d'étage final (28) à un appareil de commande (80) par une ligne d'alimentation (31), par laquelle le moteur électrique (10) est alimenté avec une tension continue (Ub), lequel procédé présente les étapes suivantes :
A) la valeur de donnée est convertie en une suite de signaux numériques (132') ;
B) la suite de signaux numériques (132') est transmise par la ligne d'alimentation (31) en élevant et abaissant de façon impulsionnelle le courant (I_Ub) circulant par la ligne d'alimentation (31) par activation et désactivation du commutateur d'étage final (28) en fonction de la suite de signaux numériques ;
C) dans l'appareil de commande (80), le courant (I_Ub) circulant par la ligne d'alimentation (31) est mesuré et la valeur de donnée transmise déterminée à partir du résultat de cette mesure.
